# FASCICULE DE BREVET EUROPEEN

(11) **EP 2 748 239 B1**
(45) Date de publication et mention de la délivrance du brevet: **04.03.2015**
(21) Numéro de dépôt: 12748750.2
(22) Date de dépôt: 02.08.2012
(51) Int. Cl.: C08J 9/00, C08J 9/14

(54) **MOUSSES RIGIDES A BASE DE TANINS DE TYPE PROCYANIDINE OU PRODELPHINIDINE ET LEUR PROCEDE DE PREPARATION**
HARTSCHAUMSTOFFE AUF DER BASIS VON PROCYANIDIN-UND/ODER PRODELPHINIDIN-TANNINEN UND HERSTELLUNGSVERFAHREN DAFÜR
RIGID FOAMS BASED ON PROCYANIDIN- AND/OR PRODELPHINIDIN-TYPE TANNINS AND PREPARATION METHOD THEREOF

(30) Priorité: 23.08.2011 FR 1102581
(43) Date de publication de la demande: 02.07.2014
(73) Titulaire: Université de Lorraine, 54052 Nancy Cedex (FR); Centre National de la Recherche Scientifique, 75794 Paris Cedex 16 (FR)
(72) Inventeur: CELZARD, Alain, F-88000 Epinal (FR); BASSO, Maria-Cecilia, F-88000 Epinal (FR); PIZZI, Antonio, F-88000 Chantraine (FR); FIERRO, Vanessa, F-88000 Epinal (FR)
(74) Mandataire: Pontet Allano & Associes
(86) Numéro de dépôt international: PCT/FR2012/051828
(87) Numéro de publication internationale: WO 2013/026974

(56) Documents cités:
- GB-A- 1 544 411
- TONDI G ET AL: "Metal adsorption of tannin based rigid foams", INDUSTRIAL CROPS AND PRODUCTS, ELSEVIER, NL, vol. 29, no. 2-3, 1 mars 2009 (2009-03-01) , pages 336-340, XP025951520, ISSN: 0926-6690, DOI: 10.1016/J.INDCROP.2008.06.006 [extrait le 2008-08-06]

## Description

La présente invention concerne des mousses rigides à base de tanins de type procyanidine ou prodelphinidine et leur procédé de préparation.

Les mousses à structure thermodurcissables (mousses rigides) sont énormément utilisées dans le cadre du transport, de l'emballage, la protection, l'isolation, mais aussi dans les matériaux de construction, les automobiles, les structures aéronautiques et marines, et également dans des applications électroniques et des retardants de flamme.

Pour toutes ces applications, les performances concernant le feu, la fumée et la toxicité sont critiques. De ce point de vue, les performances des mousses phénoliques sont bien plus élevées que celles des mousses de polyuréthanes, de chlorure de polyvinyle ou de polystyrène.

En raison de leurs bonnes propriétés isolantes, de leur faible densité, des caractéristiques de résistance au feu remarquables, de leur faible émission de fumée, de l'absence de suintement de plastique fondu lorsqu'elles sont exposées à une flamme et d'un faible coût, les mousses phénoliques procurent une solution appropriée pour les matériaux d'isolation et multicouches.

Elles sont aussi hautement résistantes aux produits chimiques et aux solvants.

Enfin, en raison de leur caractère cassant, les mousses phénoliques sont capables de dissiper l'énergie irréversiblement par endommagement et rupture du squelette et trouver ainsi des applications dans le domaine de la protection contre les accidents et l'emballage.

Les mousses à base de produits naturels telles que les mousses à base de tanins de végétaux, peuvent remplacer les mousses phénol-formaldéhyde (c'est-à-dire les résols phénoliques) dans la plupart des applications étant donné qu'elles présentent des propriétés comparables et que les tanins de végétaux combinent une réactivité élevée, une origine « verte » et un faible coût.

Deux grandes familles de tanins peuvent être distinguées : les tanins hydrolysables et les tanins condensés ou flavonoïdes.

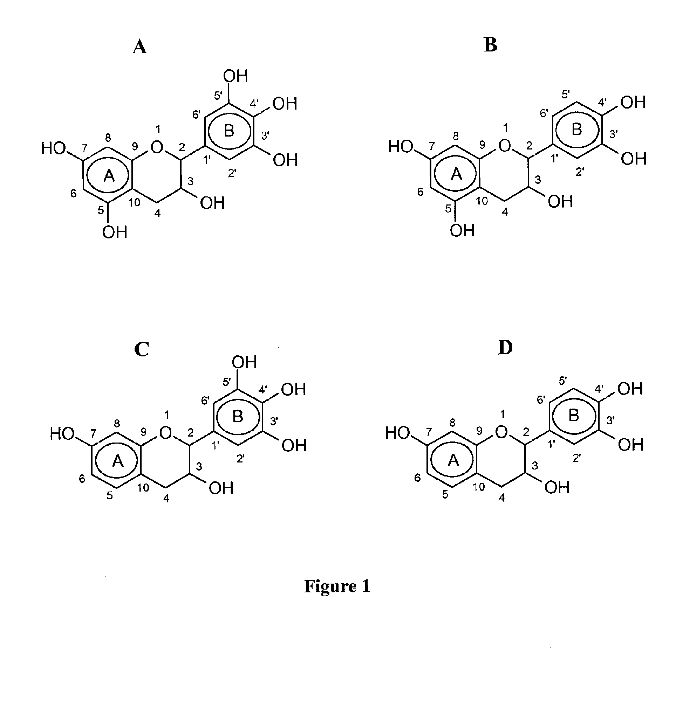

Les tanins condensés sont constitués d'unités flavonoïdes classifiées en quatre entités (Porter, L.J. : The flavonoids. J.B. Harborne, Ed., Chapman and Hall, London, 1988) (Figure 1):
- les tanins de type prodelphinidine possédant un anneau A de type phloroglucinol et un anneau B de type pyrogallol (l'élément de base est la gallocatéchine, figure 1A),
- les tanins de type procyanidine possédant un anneau A de type phloroglucinol et un anneau B de type catéchol (l'élément de base est la catéchine, figure 1B)
- les tanins de type prorobinetinidine possédant un anneau A de type résorcinol et un anneau B de type pyrogallol (l'élément de base est le robinetinidol, figure 1C),
- les tanins de type profisetinidine possédant un anneau A de type résorcinol et un anneau B de type catéchol (l'élément de base est le fisetinidol, figure 1D).

Les unités de tanins condensés sont généralement liées par des liaisons 4-6 et 4-8. Les tanins condensés ont une répétition de 2 à 8 unités flavonoïdes.

Ces différences de structure conduisent à des réactivités très différentes de ces entités.

Jusqu'à présent, les mousses rigides à base de tanin étaient préparées par mélange de tanins condensés, d'alcool furfurylique, d'éther diéthylique, de formaldéhyde, dans un milieu aqueux puis addition d'un catalyseur, en général l'acide paratoluènesulfonique (APTS), après homogénéisation du mélange. L'addition de l'APTS déclenche plusieurs réactions telles que la condensation de l'alcool furfurylique avec les flavonoïdes du tanin, la polymérisation de l'alcool furfurylique et la condensation de flavonoïdes du tanin, qui ont préalablement réagi avec le formaldéhyde, sur eux-mêmes. Ces trois réactions sont exothermiques et s'effectuent simultanément provoquant l'ébullition de l'éther diéthylique qui s'évapore en même temps que les réactions se déroulent, ce qui permet au mélange de mousser et réticuler en même temps (G. Tondi et A. Pizzi, Industrial Crops and Products, 29, 2009, 356-363).

GB 1 544 411 décrit des compositions susceptibles de mousser, lesdites compositions comprenant un tanin dérivé de mimosa, contenant du phlobaphène, du pyrocatechol, du phloroglucinolet et du résorcinol, un agent réticulant, un catalyseur, en particulier du formaldéhyde, un agent moussant et un agent exothermique, notamment de l'alcool furfurylique.

Ce procédé pose plusieurs problèmes dont l'importance dépend des applications désirées de la mousse.

D'une part, l'emploi de formaldéhyde est délicat car il est reconnu cancérigène aujourd'hui. D'autre part, la présence de formaldéhyde résiduel dans la mousse peut être problématique, notamment dans le cadre de son utilisation en tant que matériau d'isolation pour lequel il est utilisé en grandes quantités.

Par ailleurs, le formaldéhyde, classé aujourd'hui comme toxique et oncogène par l'organisation mondiale de la santé et qui ne doit pas être utilisé ou alors à une concentration très faible, est un réactif quasi incontournable pour la préparation des mousses rigides mais s'avère plus difficile d'emploi pour les tanins de type procyanidine (en particulier le tanin d'écorce de pin ou de noix de pécan) en raison d'une réactivité trop importante de ces tanins vis-à-vis du formaldéhyde que pour certains types de tanins tels que les tanins de type prorobinetinidine (en particulier le tanin d'écorce de mimosa) ou les tanins de type profisetinidine (en particulier le tanin de bois de quebracho).

La réactivité trop importante du tanin d'écorce de pin nécessite donc l'emploi d'un mélange tanin de mimosa et tanin d'écorce de pin dans lequel le tanin de pin ne peut dépasser 40% en poids.

L'un des objets de l'invention est de fournir un procédé de préparation de mousses rigides dans lequel le tanin de type procyanidine ou prodelphinidine représente 100% du poids total de tanin, avec ou sans présence de formaldéhyde.

Un autre objet de l'invention est de fournir des mousses rigides dépourvues de produits de polycondensation de formaldéhyde avec des tanins de type procyanidine ou prodelphinidine et possédant une élasticité supérieure ainsi qu'une densité apparente plus faible que les mousses de l'art antérieur et ne contenant pas d'aldéhyde résiduel.

Un autre objet de l'invention est de fournir des mousses rigides comprenant des produits de polycondensation de formaldéhyde avec des tanins de type procyanidine ou prodelphinidine et possédant une élasticité supérieure ainsi qu'une densité apparente plus faible que les mousses de l'art antérieur.

Encore un autre objet de l'invention est de fournir des mousses carbonées à partir de mousses rigides dépourvues de produits de polycondensation de formaldéhyde avec des tanins de type procyanidine ou prodelphinidine.

Encore un autre objet de l'invention est de fournir des mousses carbonées à partir de mousses rigides comprenant des produits de polycondensation de formaldéhyde avec des tanins de type procyanidine ou prodelphinidine.

La présente invention concerne l'utilisation d'au moins un tanin de type procyanidine et/ou prodelphinidine, dépourvu de tanin de type prorobinetidine ou profisetinidine, en mélange avec de l'alcool furfurylique pour la mise en oeuvre d'une réaction de polymérisation pour la préparation de mousses rigides.

Des exemples de tanins de type procyanidine, sans être limités à ceux-ci sont les tanins de pin, en particulier d'écorce de pin, de noix de pécan, de gambier (tige, tronc et feuille), d'épicéa, de sapin Douglas...

Des exemples de tanins de type prodelphinidine, sans être limités à ceux-ci sont les tanins de noix de Pecan

Les tanins de type procyanidine et/ou prodelphinidine sont dépourvus de tanin de type prorobinetidine ou profisetinidine, ce qui signifie qu'il n'y a pas de tanin par exemple de mimosa ou de quebracho avec lesdits tanins type procyanidine et/ou prodelphinidine ou qu'ils sont présents en proportion inférieure à 0,1%.

L'alcool furfurylique peut être d'origine synthétique ou isolé à partir de produits végétaux tels que la sciure de bois, le blé ou le maïs....

De manière inattendue, les Inventeurs ont trouvé que la mise au point des paramètres pour effectuer les réactions de polymérisation intervenant dans la préparation des mousses rigides permettait l'emploi de tanins de type procyanidine et/ou prodelphinidine sans adjonction de tanin de type prorobinetidine ou profisetinidine et conduisait à des mousses rigides possédant des caractéristiques physiques supérieures à celles de mousses rigides de l'art antérieur obtenues avec du tanin d'écorce de mimosa ou un mélange tanin d'écorce de mimosa et d'écorce de pin.

Dans un mode de réalisation avantageux, la présente invention concerne l'utilisation d'au moins un tanin de type procyanidine et/ou prodelphinidine, dépourvu de tanin de type prorobinetidine ou profisetinidine, en mélange avec de l'alcool furfurylique pour la mise en oeuvre d'une réaction de polymérisation pour la préparation de mousses rigides, dans laquelle ledit tanin de type procyanidine et/ou prodelphinidine est du tanin d'écorce de pin.

L'écorce de pin est avantageusement utilisée car la proportion de tanin la plus élevée dans le pin se trouve dans l'écorce de ce dernier.

Dans un mode de réalisation avantageux, la présente invention concerne l'utilisation d'au moins un tanin de type procyanidine et/ou prodelphinidine, en particulier du tanin d'écorce de pin, dépourvu de tanin de type prorobinetidine ou profisetinidine, en mélange avec de l'alcool furfurylique pour la mise en oeuvre d'une réaction de polymérisation pour la préparation de mousses rigides, dans laquelle ledit mélange tanin-alcool furfurylique est dépourvu de formaldéhyde.

Par formaldéhyde, il faut comprendre du formaldéhyde sous forme monomérique telle que la formaline liquide, ou du paraformaldéhyde sous forme de polyacétal.

De manière inattendue et en contradiction avec l'art antérieur qui considère le formaldéhyde comme un réactif de choix pour la préparation de mousses puisque sa réaction avec les flavonoïdes du tanin et la polycondensation qui suit est un facteur clé pour la formation des mousses, les Inventeurs ont trouvé que la mise au point des paramètres de réaction permettait la suppression dudit formaldéhyde tout en permettant toujours l'obtention de mousses rigides et possédant de plus des propriétés physiques supérieures à celles de l'art antérieur.

Dans un mode de réalisation avantageux, la présente invention concerne l'utilisation d'au moins un tanin de type procyanidine et/ou prodelphinidine, en particulier du tanin d'écorce de pin, dépourvu de tanin de type prorobinetidine ou profisetinidine, en mélange avec de l'alcool furfurylique pour la mise en oeuvre d'une réaction de polymérisation pour la préparation de mousses rigides, dans laquelle ledit mélange tanin-alcool furfurylique comprend du formaldéhyde.

De manière tout aussi inattendue et toujours en contradiction avec l'art antérieur qui considère que le formaldéhyde n'est pas approprié pour la préparation de mousses de type procyanidine et/ou prodelphinidine puisque la réaction du formaldéhyde avec les flavonoïdes de tanins de type procyanidine et/ou prodelphinidine et la polycondensation qui suit est trop rapide pour provoquer une augmentation de température suffisante du milieu réactionnel et laisser le temps à la mousse de se développer, les Inventeurs ont trouvé que la mise au point des paramètres de réaction permettait d'utiliser des tanins de type procyanidine et/ou prodelphinidine avec ledit formaldéhyde tout en permettant toujours l'obtention de mousses rigides et possédant de plus des propriétés physiques supérieures à celles de l'art antérieur.

Dans un mode de réalisation avantageux, le formaldéhyde peut être partiellement substitué ou remplacé par le glyoxal, l'hexamine, l'acétaldéhyde, le propionaldéhyde, le butyraldéhyde, l'isobutyraldéhyde ou le furaldéhyde.

Dans un mode de réalisation avantageux, la présente invention concerne l'utilisation d'au moins un tanin de type procyanidine et/ou prodelphinidine, en particulier du tanin d'écorce de pin, dépourvu de tanin de type prorobinetidine ou profisetinidine, en mélange avec de l'alcool furfurylique pour la mise en oeuvre d'une réaction de polymérisation pour la préparation de mousses rigides,

dans laquelle ledit mélange tanin-alcool furfurylique est dépourvu de formaldéhyde, ou
dans laquelle ledit mélange tanin-alcool furfurylique comprend du formaldéhyde, comprenant de plus un solvant volatil, en particulier de l'éther diéthylique, un catalyseur, en particulier de l'acide paratoluènesulphonique, et éventuellement un ou plusieurs additifs.

Les différentes réactions de polycondensation qui s'effectuent lors de la préparation de la mousse sont exothermiques et provoquent l'ébullition du solvant. Cependant, pour que cette ébullition puisse s'effectuer correctement, il est nécessaire d'utiliser des solvants volatils, c'est-à-dire avec un point d'ébullition relativement faible, c'est-à-dire compris de 30°C à 100°C, en particulier de 30°C à 65°C.

Des exemples de solvants volatils sont, sans être limités à ceux-ci, l'éther diéthylique, le pentane, l'acétone, l'éther de pétrole.

Avantageusement, le solvant est l'éther diéthylique.

Le solvant doit être volatil car son évaporation avec la chaleur dégagée par les réactions de polymérisation est responsable de la structure alvéolée de la mousse et permet notamment à la mousse de gonfler. Le solvant est ainsi également dénommé agent gonflant.

Par le terme « catalyseur », il faut comprendre un acide organique qui déclenche les différentes réactions de polycondensation.

L'acide organique peut être, par exemple sans être limité à ceux-ci, l'acide paratoluènesulfonique et l'acide phénol sulfonique.

Avantageusement, l'acide est de l'acide paratoluènesulfonique.

Le terme « additifs » désigne différents composés qui vont agir soit :
sur les propriétés structurales (densité et texture poreuse) et/ou sur les propriétés physiques (absorption d'eau, résistance à la compression de la mousse, etc. tels que, mais sans être limités à ceux-ci, les tensio-actifs, du polyuréthane, des nanoparticules d'argile ou du PEG, ou
sur la résistance au feu, tels que mais sans être limités à ceux-ci, l'acide borique ou l'acide phosphorique ou un mélange des deux.

Dans un mode de réalisation avantageux, la présente invention concerne l'utilisation d'au moins un tanin de type procyanidine et/ou prodelphinidine, dépourvu de tanin de type prorobinetidine ou profisetinidine, en mélange avec de l'alcool furfurylique pour la mise en oeuvre d'une réaction de polymérisation pour la préparation de mousses rigides, dans laquelle ledit mélange tanin-alcool furfurylique est dépourvu de formaldéhyde, telle que définie ci-dessus, ladite réaction comprenant les proportions suivantes :
- environ 15% à environ 66% en poids par rapport au total des constituants du mélange, de tanin de type procyanidine et/ou prodelphinidine, en particulier du tanin d'écorce de pin,
- plus de 0% à au plus 21% en poids d'un acide organique,
- environ 15% à environ 60% en poids d'alcool furfurylique,
- au moins environ 2% en poids d'un solvant volatil, en particulier de l'éther éthylique,
- éventuellement jusqu'à environ 10% en poids d'un polyéther de poids moléculaire inférieur à environ 1000, de préférence inférieur à environ 600, notamment du PEG, en tant qu'additif,
- éventuellement un ou plusieurs autres additifs choisis parmi les tensioactifs, l'acide borique ou l'acide phosphorique ou un mélange des deux, du polyuréthane ou des nanoparticules d'argile, en proportion d'environ 1 à 10% en poids.

Il faut noter que hormis l'eau présente dans les tanins et les différents réactifs, il n'y a pas addition d'eau supplémentaire contrairement aux proportions décrites dans l'art antérieur dans lequel environ de 7 à 10% en poids d'eau sont ajoutés dans le mélange.

Le PEG est un additif dont la présence permet de dissiper une partie de la chaleur de la réaction, avec comme effet le changement des rapports des vitesses - gonflement - durcissement. La conséquence principale est que la mousse peut gonfler davantage avant de durcir, ce qui conduit à une densité plus faible qu'en l'absence de PEG.

Dans un mode de réalisation avantageux, la présente invention concerne l'utilisation d'au moins un tanin de type procyanidine et/ou prodelphinidine, dépourvu de tanin de type prorobinetidine ou profisetinidine, en mélange avec de l'alcool furfurylique pour la mise en oeuvre d'une réaction de polymérisation pour la préparation de mousses rigides, dans laquelle ledit mélange tanin-alcool furfurylique est dépourvu de formaldéhyde, telle que définie ci-dessus, ladite réaction comprenant les proportions suivantes :
- environ 15% à environ 66% en poids par rapport au total des constituants du mélange, de tanin de type procyanidine et/ou prodelphinidine, en particulier du tanin d'écorce de pin,
- plus de 0% à au plus 21 % en poids d'un acide organique,
- environ 15% à environ 60% en poids d'alcool furfurylique,
- au moins environ 2% en poids d'un solvant volatil, en particulier de l'éther éthylique,
- jusqu'à environ 10% en poids d'un polyéther de poids moléculaire inférieur à environ 1000, de préférence inférieur à environ 600, notamment du PEG, en tant qu'additif,
- éventuellement un ou plusieurs autres additifs choisis parmi les tensioactifs, l'acide borique ou l'acide phosphorique ou un mélange des deux, du polyuréthane ou des nanoparticules d'argile, en proportion d'environ 1 à 10% en poids.

Dans un mode de réalisation avantageux, la présente invention concerne l'utilisation d'au moins un tanin de type procyanidine et/ou prodelphinidine, dépourvu de tanin de type prorobinetidine ou profisetinidine, en mélange avec de l'alcool furfurylique pour la mise en oeuvre d'une réaction de polymérisation pour la préparation de mousses rigides,
dans laquelle ledit mélange tanin-alcool furfurylique comprend du formaldéhyde, telle que définie ci-dessus, ladite réaction comprenant les proportions suivantes :
- environ 15% à environ 66% en poids par rapport au total des constituants du mélange, de tanin de type procyanidine et/ou prodelphinidine, en particulier du tanin d'écorce de pin,
- plus de 0% à au plus 21% en poids d'un acide organique,
- environ 15% à environ 60% en poids d'alcool furfurylique,
- plus de 0% à au plus 15% en poids de formaldéhyde,
- au moins environ 2% en poids d'un solvant volatil, en particulier de l'éther éthylique,
- éventuellement jusqu'à environ 10% en poids d'un polyéther de poids moléculaire inférieur à environ 1000, de préférence inférieur à environ 600, notamment du PEG,
- éventuellement un ou plusieurs additifs choisis parmi les tensioactifs, l'acide borique ou l'acide phosphorique ou un mélange des deux, du polyuréthane ou des nanoparticules d'argile, en proportion d'environ 1% à 10% en poids au maximum.

Il faut noter que hormis l'eau présente dans les tanins et les différents réactifs, il n'y a pas addition d'eau supplémentaire contrairement aux proportions décrites dans l'art antérieur dans lequel environ de 7 à 10% en poids d'eau sont ajoutés dans le mélange.

La quantité d'alcool furfurylique est à ajuster en fonction de celle du formaldéhyde introduit. Moins il y a de formaldéhyde, plus la quantité d'alcool furfurylique à ajouter est importante.

Dans un mode de réalisation avantageux, la présente invention concerne l'utilisation d'au moins un tanin de type procyanidine et/ou prodelphinidine, dépourvu de tanin de type prorobinetidine ou profisetinidine, en mélange avec de l'alcool furfurylique pour la mise en oeuvre d'une réaction de polymérisation pour la préparation de mousses rigides, dans laquelle ledit mélange tanin-alcool furfurylique est dépourvu de formaldéhyde, telle que définie ci-dessus, ladite réaction comprenant les proportions suivantes :
- environ 15% à environ 66% en poids par rapport au total des constituants du mélange, de tanin de type procyanidine et/ou prodelphinidine, en particulier du tanin d'écorce de pin,
- plus de 0% à au plus 21% en poids d'un acide organique,
- environ 15% à environ 60% en poids d'alcool furfurylique,
- au moins environ 2% en poids d'un solvant volatil, en particulier de l'éther éthylique,
- jusqu'à environ 10% en poids d'un polyéther de poids moléculaire inférieur à environ 1000, de préférence inférieur à environ 600, notamment du PEG, en tant qu'additif,
- éventuellement un ou plusieurs autres additifs choisis parmi les tensioactifs, l'acide borique ou l'acide phosphorique ou un mélange des deux, du polyuréthane ou des nanoparticules d'argile, en proportion d'environ 1 à 10% en poids.

Les tanins de pin possèdent une très grande réactivité avec le formaldéhyde dans des conditions acides. La difficulté est donc de laisser le mélange mousser et durcir au même moment que le solvant s'évapore. La réaction ne doit pas commencer avant que la température suffisante soit atteinte pour laisser le solvant jouer son rôle d'agent moussant. Dans ce mode de réalisation, le dit polyéther permet donc:
d'abaisser l'exotherme de la réaction et évite ainsi la formation de grosses bulles à l'intérieur de la structure de mousse finale,
de réduire l'agglomération de tanin dans le mélange ce qui améliore l'homogénéité de la mousse finale.

Dans un mode de réalisation avantageux, ledit polyéther est du PEG de poids moléculaire inférieur à environ 1000, de préférence inférieur à environ 600.

Selon un autre aspect, la présente invention concerne une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique.

Les flavonoïdes de tanins de type procyanidine et/ou prodelphinidine polymérisent avec l'alcool furfurylique pour conduire à la structure suivante I:

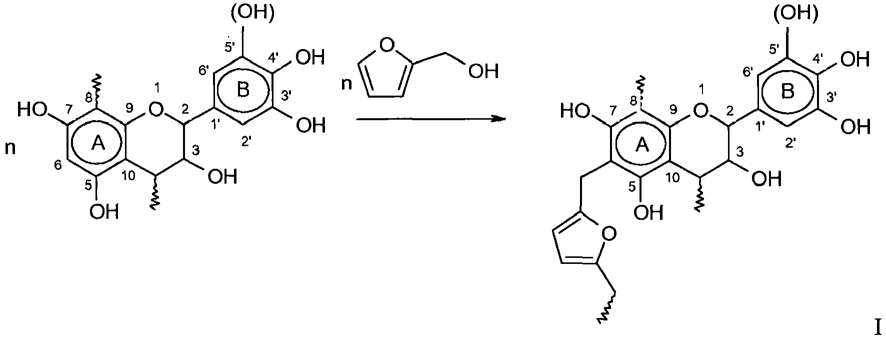

Les flavonoïdes de tanins de type prorobinetidine ou profisetinidine polymérisent avec l'alcool furfurylique pour conduire à la structure suivante II:

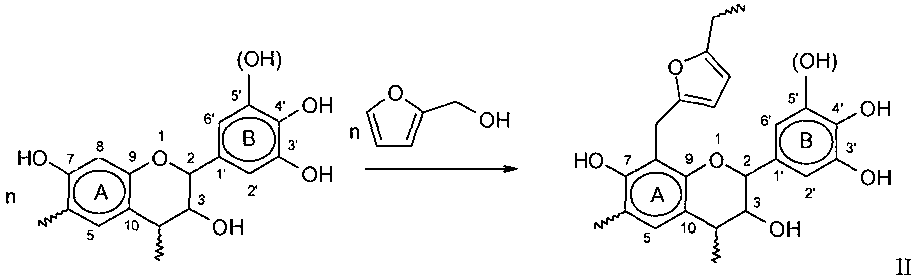

Les mousses selon l'invention sont donc dépourvues de produits de structure II.

Dans un mode de réalisation avantageux, la présente invention concerne une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique, telle que définie ci-dessus, dans laquelle ledit tanin est du tanin d'écorce de pin.

Le produit de polymérisation du tanin d'écorce de pin et de l'alcool furfurylique correspond donc à la structure I dans laquelle le groupe OH en position 5' n'existe pas et est remplacé par un H.

Dans un mode de réalisation avantageux, la présente invention concerne une mousse rigide comprenant au moins un tanin de type procyanidine et/ou prodelphinidine, en particulier du tanin d'écorce de pin, polymérisé avec de l'alcool furfurylique et dépourvue de tanin de type prorobinetidine ou profisetinidine polymérisé avec de l'alcool furfurylique, telle que définie ci-dessus, et
dépourvue de produits de polycondensation du formaldéhyde avec ledit tanin de type procyanidine et/ou prodelphinidine.

Lorsque le formaldéhyde est présent dans un milieu réactionnel qui comprend un tanin de type procyanidine et/ou prodelphinidine et dépourvu de tanin de type prorobinetidine ou profisetinidine, il réagit tout d'abord avec le tanin de type procyanidine et/ou prodelphinidine en position 6 pour former le 6-hydroxyméthyle flavonoïde correspondant.

Après addition du catalyseur, le 6-hydroxyméthyle flavonoïde réagit avec lui-même pour former le produit de formule III suivante :

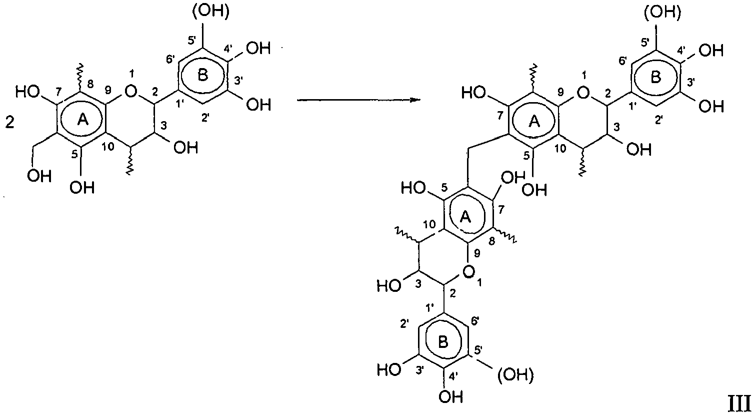

Lorsque le formaldéhyde est présent dans un milieu réactionnel qui comprend un tanin de type prorobinetidine ou profisetinidine, et dépourvu de tanin de type procyanidine et/ou prodelphinidine, il réagit tout d'abord avec le tanin de type prorobinetidine ou profisetinidine en position 8 pour former le 8-hydroxyméthyle flavonoïde correspondant.

Après addition du catalyseur, le 8-hydroxyméthyle flavonoïde réagit avec lui-même pour former le produit de formule IV suivante :

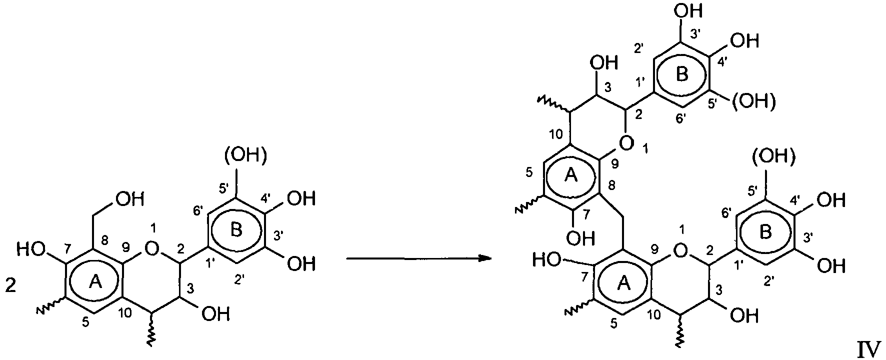

Dans ce mode de réalisation, le formaldéhyde n'est pas présent et par conséquent, la mousse est dépourvue aussi bien de produit de formule III que de produit de formule IV.

Un des avantages de ladite mousse est qu'elle ne contient pas de formaldéhyde dans le milieu réactionnel, évitant ainsi les problèmes de toxicité du formaldéhyde, cancérigène, mais également qu'elle ne contient pas de formaldéhyde résiduel après réaction, ce qui permet des utilisations variées de ladite mousse.

Dans un mode de réalisation avantageux, la présente invention concerne une mousse rigide comprenant au moins un tanin de type procyanidine et/ou prodelphinidine, en particulier du tanin d'écorce de pin, polymérisé avec de l'alcool furfurylique et dépourvu de tanin de type prorobinetidine ou profisetinidine polymérisé avec de l'alcool furfurylique, dépourvue de produits de polycondensation du formaldéhyde avec ledit tanin de type procyanidine et/ou prodelphinidine et de produits de polycondensation du formaldéhyde avec ledit tanin de type prorobinetidine ou profisetinidine, et ayant une densité apparente comprise de 0,01 g/cm³ à 0,16 g/cm³, en particulier 0,02 g/cm³ à 0,025 g/cm³ et/ou une conductivité thermique comprise de 0,03 W/m/K à 0,05 W/m/K, en particulier 0,030 W/m/K et/ou un module d'élasticité compris de 0,05 MPa à 14 MPa, en particulier de 0,1 MPa.

La densité apparente est définie comme la masse de matériau divisée par le volume total qu'il occupe.

La densité apparente est mesurée par la masse d'échantillons parallélépipédiques de dimensions connues.

La conductivité thermique représente la capacité d'isolation du matériau. Plus la valeur est faible, plus le matériau a des capacités d'isolation. La conductivité thermique peut être mesurée par une méthode transitoire par contact telle que celle dite du disque chaud (Hot Disk TPS 2500, Thermoconcept).

Le module d'élasticité représente l'élasticité ou la plasticité d'un matériau. Plus la valeur est faible et plus le matériau est élastique. Il peut être calculé comme indiqué dans A Celzard et al. (Materials Science and Engineering A, 527, (2010), 4438-4446).

La mousse obtenue avec le procédé de l'invention sans formaldéhyde possède des caractéristiques physiques différentes de celles de l'art antérieur et notamment une densité apparente notablement plus faible, une élasticité supérieure ce qui la rend encore plus attrayante pour une application de résistance aux chocs et une conductivité thermique également plus faible ce qui lui procure des qualités d'isolation thermique supérieures.

Par ailleurs, elles conservent leur nature ininflammable et notamment des temps pour auto-extinction très faibles, de l'ordre de quelques secondes et en tout état de cause, toujours très largement inférieurs à la minute.

Dans un mode de réalisation avantageux, la présente invention concerne une mousse rigide comprenant au moins un tanin de type procyanidine et/ou prodelphinidine, en particulier du tanin d'écorce de pin, polymérisé avec de l'alcool furfurylique et dépourvue de tanin de type prorobinetidine ou profisetinidine polymérisé avec de l'alcool furfurylique, et
comprenant de plus des produits de polycondensation du formaldéhyde avec ledit tanin de type procyanidine et/ou prodelphinidine, et dépourvue de produits de polycondensation de formaldéhyde et de tanin de type prorobinetidine et/ou profisetinidine.

Dans ce mode de réalisation, ladite mousse est obtenue par le procédé comprenant du formaldéhyde. Ladite mousse comprend donc des produits de formule I, et des produits de formule III mais est dépourvue de produit de formule II et de produits de formule IV.

Ladite mousse est donc susceptible de contenir du formaldéhyde résiduel après réaction.

Dans un mode de réalisation avantageux, la présente invention concerne une mousse rigide comprenant au moins un tanin de type procyanidine et/ou prodelphinidine, en particulier du tanin d'écorce de pin, polymérisé avec de l'alcool furfurylique et dépourvue de tanin de type prorobinetidine ou profisetinidine polymérisé avec de l'alcool furfurylique., telle que définie ci-dessus, comprenant de plus des produits de polycondensation du formaldéhyde avec ledit tanin de type procyanidine et/ou prodelphinidine, et dépourvue de produits de polycondensation du formaldéhyde avec ledit tanin de type prorobinetidine et/ou profisetinidine,
ayant une densité apparente comprise de 0,01 g/cm³ à 0,20 g/cm³, notamment de 0,01 g/cm³ à 0,16 g/cm³, en particulier 0,07 g/cm³ et/ou une conductivité thermique comprise de 0,03 W/m/K à 0,06 W/m/K, notamment de 0,03 W/m/K à 0,05 W/m/K, en particulier 0,039 W/m/K et/ou un module d'élasticité compris de 0,16 MPa à 30 MPa, notamment de 0,16 MPa à 16 MPa, avantageusement 2,5, en particulier de 1,49 MPa.

Les mousses selon l'invention obtenues avec le procédé comprenant du formaldéhyde possèdent des caractéristiques légèrement différentes de celles obtenues sans formaldéhyde et notamment une densité apparente légèrement plus élevée, une conductivité thermique légèrement plus élevée et une élasticité légèrement inférieure par rapport aux mousses obtenues avec le procédé sans formaldéhyde.

Dans un mode de réalisation avantageux, la présente invention concerne une mousse rigide comprenant au moins un tanin de type procyanidine et/ou prodelphinidine, en particulier du tanin d'écorce de pin, polymérisé avec de l'alcool furfurylique et dépourvue de tanin de type prorobinetidine ou profisetinidine polymérisé avec de l'alcool furfurylique,
- dépourvue de produits de polycondensation du formaldéhyde avec ledit tanin de type procyanidine et/ou prodelphinidine et de produits de polycondensation du formaldéhyde avec ledit tanin de type prorobinetidine ou profisetinidine, telle que définie ci-dessus, ou
- comprenant de plus des produits de polycondensation du formaldéhyde avec ledit tanin de type procyanidine et/ou prodelphinidine, et dépourvue de produits de polycondensation du formaldéhyde avec ledit tanin de type prorobinetidine et/ou profisetinidine, telle que définie ci-dessus, et
comprenant de plus un ou plusieurs additifs, en particulier choisis dans le groupe comprenant un tensioactif, de l'acide borique, de l'acide phosphorique, du PEG et leurs mélanges.

La présence d'un additif tel que l'acide borique ou l'acide phosphorique ou le mélange des deux permet de réduire à un temps nul le temps pour l'auto-extinction des mousses.

Dans un mode de réalisation avantageux, lesdits additifs sont présents en proportion d'environ 1 à 10% en poids par rapport au poids total des constituants du mélange initial.

Dans un mode de réalisation avantageux, lesdits additifs sont un polyéther de poids moléculaire inférieur à environ 1000, de préférence inférieur à environ 600, notamment du PEG.

Selon un autre aspect, la présente invention concerne une mousse carbonée obtenue à partir d'une mousse rigide comprenant au moins un tanin de type procyanidine et/ou prodelphinidine, dépourvue de tanin de type prorobinetidine et/ou profisetinidine, et dépourvue de produits de polycondensation du formaldéhyde avec ledit tanin de type procyanidine et/ou prodelphinidine et de produits de polycondensation du formaldéhyde avec ledit tanin de type prorobinetidine ou profisetinidine, telle que définie ci-dessus,
pouvant être obtenue par pyrolyse de ladite mousse rigide.

Les mousses carbonées obtenues ont exactement les mêmes densités apparentes que les mousses rigides précurseurs à base de tanins. Leur conductivité thermique est dans la gamme 0,035 - 0,12 W/m/K, et leur module d'élasticité dans la gamme 0.05 - 55 MPa.

Il n'y a pas, à densité apparente équivalente, de différence notable de propriétés comparées aux mousses carbonées dont le précurseur contenait initialement du formaldéhyde.

Les mousses carbonées peuvent être utilisées pour la fabrication de charbons actifs à porosité duale, de supports de catalyseurs, d'électrodes poreuses, de filtres pour métaux fondus et autres fluides chauds et/ou corrosifs, d'absorbeurs de choc ou de boucliers thermiques et électromagnétiques.

Selon un autre aspect, la présente invention concerne une mousse carbonée obtenue à partir d'une mousse rigide comprenant au moins un tanin de type procyanidine et/ou prodelphinidine, et dépourvue de tanin de type prorobinetidine et/ou profisetinidine, comprenant des produits de polycondensation du formaldéhyde avec ledit tanin de type procyanidine et/ou prodelphinidine et dépourvue de produits de polycondensation du formaldéhyde avec ledit tanin de type prorobinetidine et/ou profisetinidine, telle que définie ci-dessus,
pouvant être obtenue par pyrolyse de ladite mousse rigide.

Les mousses carbonées obtenues ont exactement les mêmes densités apparentes que les mousses rigides précurseurs à base de tanins. Leur conductivité thermique est dans la gamme 0,035 - 0,12 W/m/K, et leur module d'élasticité dans la gamme 0.05 - 55 MPa.

Selon un autre aspect, la présente invention concerne un procédé de préparation d'une mousse rigide comprenant au moins un tanin de type procyanidine et/ou prodelphinidine, polymérisé avec de l'alcool furfurylique et dépourvue de tanin de type prorobinetidine ou profisetinidine,
comprenant de deux à cinq étapes d'introduction d'au moins un tanin de type procyanidine et/ou prodelphinidine, dépourvu de tanin de type prorobinetidine et/ou profisetinidine, avec de l'alcool furfurylique.

De manière inattendue, les Inventeurs ont trouvé que l'introduction des tanins en plusieurs étapes dans le milieu réactionnel et dans un temps limité permettait l'homogénéisation du milieu et l'obtention de mousses comprenant au moins un tanin de type procyanidine et/ou prodelphinidine, ainsi qu'évitait la réaction du tanin avec l'alcool furfurylique avant que le gonflement n'ait lieu.

Dans un mode de réalisation avantageux, les tanins sont introduits en deux fois.

Dans un mode de réalisation avantageux, les tanins sont introduits en trois fois.

Dans un mode de réalisation avantageux, les tanins sont introduits en quatre fois.

Dans un mode de réalisation avantageux, les tanins sont introduits en cinq fois.

Dans un mode de réalisation avantageux, la présente invention concerne un procédé de préparation d'une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique, et dépourvue de produits de polycondensation du formaldéhyde avec ledit tanin de type procyanidine et/ou prodelphinidine et de produits de polycondensation du formaldéhyde avec ledit tanin de type prorobinetidine ou profisetinidine, telle que définie ci-dessus,
comprenant moins de 13% d'eau avant le début de la polymérisation.

L'eau présente dans le milieu réactionnel, juste avant le début des réactions de polymérisation, provient uniquement de celle présente dans les différents constituants de la formulation.

Ainsi les tanins ont une humidité d'environ 9% et l'acide paratoluènesulfonique utilisé est à 65% dans l'eau.

Contrairement au procédé de l'art antérieur avec le tanin de type prorobinetidine ou profisetinidine dans lequel de 7 à 9% d'eau sont ajoutés dans le milieu réactionnel, dans le procédé de l'invention sans formaldéhyde, l'eau n'est pas un des constituants.

Cependant, dans le cas où l'APTS solide serait utilisé, ou remplacé par un autre acide organique, il y aurait lieu d'introduire dans le milieu réactionnel la quantité d'eau manquante correspondante.

Dans un mode de réalisation avantageux, la présente invention concerne un procédé de préparation d'une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique, et comprenant des produits de polycondensation du formaldéhyde avec ledit tanin de type procyanidine et/ou prodelphinidine, et dépourvue de produits de polycondensation du formaldéhyde avec ledit tanin de type prorobinetidine et/ou profisetinidine, telle que définie ci-dessus,
comprenant moins de 22% d'eau avant le début de la polymérisation.

L'eau présente dans le milieu réactionnel, juste avant le début des réactions de polymérisation, provient uniquement de celle présente dans les différents constituants participant à la réaction.

Ainsi les tanins ont une humidité d'environ 9%, l'acide paratoluènesulfonique utilisé est à 65% dans l'eau et le formaldéhyde est à 37% dans l'eau.

Contrairement au procédé de l'art antérieur avec le tanin de type prorobinetidine ou profisetinidine dans lequel de 7 à 9% d'eau sont ajoutés dans le milieu réactionnel, dans le procédé de l'invention avec formaldéhyde, l'eau n'est pas un des constituants.

Cependant, dans le cas où l'APTS solide serait utilisé, ou remplacé par un autre acide organique, et/ou le formaldéhyde aqueux serait remplacé par un autre aldéhyde, il y aurait lieu d'introduire dans le milieu réactionnel la quantité d'eau manquante correspondante.

Dans un mode de réalisation avantageux, la présente invention concerne un procédé de préparation d'une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique, tel que défini ci-dessus,
dans lequel lesdites étapes de mise en contact d'au moins un tanin de type procyanidine et/ou prodelphinidine avec de l'alcool furfurylique sont effectuées en présence d'un solvant volatil, en particulier de l'éther diéthylique, et éventuellement d'additifs, dans un temps inférieur à 30 minutes, préférentiellement inférieur à 20 minutes et plus préférentiellement inférieur à 10 minutes.

Les Inventeurs ont trouvé que l'introduction des tanins devait être effectuée rapidement, dans le mélange dans lequel le catalyseur n'est pas encore présent, pour éviter la réaction prématurée de l'alcool furfurylique avec le tanin qui n'est alors plus disponible pour s'auto condenser et dégager la chaleur nécessaire pour l'évaporation du solvant volatil ce qui conduit à des mousses qui ne gonflent pas suffisamment.

Dans un mode de réalisation avantageux, la présente invention concerne un procédé de préparation d'une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique, dans lequel lesdites étapes de mise en contact d'au moins un tanin de type procyanidine et/ou prodelphinidine avec de l'alcool furfurylique sont effectuées en présence d'un solvant volatil, en particulier de l'éther diéthylique, et éventuellement d'additifs, dans un temps inférieur à 30 minutes, préférentiellement inférieur à 20 minutes et plus préférentiellement inférieur à 10 minutes, tel que défini ci-dessus,
comprenant de plus une étape d'addition d'un catalyseur, en particulier de l'acide paratoluènesulfonique.

L'addition du catalyseur permet le déclenchement des réactions de polymérisation.

Dans un délai de 1 à 3 minutes après addition du catalyseur, le gonflement de la structure commence. L'énergie nécessaire au développement de la mousse est produite par les différentes réactions.

Dans un mode de réalisation avantageux, la présente invention concerne un procédé de préparation d'une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique, et dépourvue de produits de polycondensation du formaldéhyde avec ledit tanin de type procyanidine et/ou prodelphinidine et de produits de polycondensation du formaldéhyde avec ledit tanin de type prorobinetidine ou profisetinidine, telle que définie ci-dessus,
comprenant les étapes suivantes :
a. Introduction d'une fraction en poids de la quantité totale d'au moins un tanin de type procyanidine et/ou prodelphinidine, dépourvu de tanin de type prorobinetidine et/ou profisetinidine à mettre en oeuvre, en particulier 1/3, dans un mélange comprenant de l'alcool furfurylique, de l'éther diéthylique et éventuellement des additifs,
b. Agitation du mélange de l'étape a.
c. Introduction d'une deuxième fraction en poids équivalente à celle de l'étape a. et agitation.
d. Introduction d'une troisième fraction en poids équivalente à celle de l'étape a. et agitation.
e. Agitation du mélange comprenant la quantité totale de tanin, de l'alcool furfurylique, de l'éther diéthylique et éventuellement des additifs pendant un temps qui assure l'homogénéité du mélange.
f. Addition éventuelle d'autres additifs à ce mélange et agitation jusqu'à homogénéisation complète.
g. Addition au mélange comprenant la quantité totale de tanin, d'un catalyseur, en particulier de l'acide paratoluènesulfonique.
h. Agitation du mélange comprenant la quantité totale de tanin, de l'alcool furfurylique, de l'éther diéthylique, éventuellement des additifs et le catalyseur à une vitesse équivalente à celle de l'étape c pendant un temps qui assure l'homogénéité.

Dans ce mode de réalisation, le procédé est dépourvu de formaldéhyde et hormis l'eau présente dans les constituants de la formulation, il n'y a pas d'eau ajoutée dans celle-ci.

Les tanins se présentent sous la forme d'une poudre obtenue par atomisation (spray-drying) d'une solution mère, et qui doit être éventuellement affinée par broyage en mortier en cas d'agglomération des particules. Cette étape ne modifie pas la taille des particules.

La quantité de tanin à introduire dépend du nombre d'étapes totales d'introduction prévues.

En règle générale, le tanin est partagé en quantité équivalente dépendant du nombre d'étapes.

Ainsi pour deux étapes d'introduction, le tanin est introduit par moitié (en poids).

Pour trois étapes, le tanin est introduit par tiers (en poids).

Pour quatre étapes le tanin est introduit par quart (en poids).

Pour cinq étapes, le tanin est introduit par 1/5 (en poids).

Il peut cependant être envisagé que l'une ou plusieurs des étapes d'introduction comprennent une quantité supérieure à ces proportions du moment que le total introduit reste le même.

Les additifs éventuellement ajoutés sont les mêmes que ci-dessus.

La vitesse d'agitation de l'étape b. dépend du volume de matière à mélanger, du récipient et du type d'hélice utilisée.

A une échelle de laboratoire, sur une centaine de grammes, la vitesse d'agitation est de 800 tours/min.

La vitesse d'agitation de l'étape c. est effectuée à une vitesse supérieure à celle de l'étape b, environ 1,5 à 2 fois plus rapide, en particulier 1,6 fois plus rapide.

A une échelle de laboratoire, sur une centaine de grammes, la vitesse d'agitation est de 1300 tours/minute.

La vitesse d'agitation de l'étape d. est effectuée à une vitesse supérieure à celle de l'étape c.

A une échelle de laboratoire, sur une centaine de grammes, la vitesse d'agitation est de 2000 tours/minute, environ 1,4 à 2 fois plus rapide, en particulier 1,5 fois plus rapide.

La vitesse d'agitation de l'étape e. est donc à ajuster en fonction de la quantité totale de la formulation, par exemple pour que le temps de mélange complet tanin, alcool furfurylique, additifs et éther diéthylique (étapes a à f) avant l'addition du catalyseur n'excède pas une minute à l'échelle du laboratoire, ce qui est à la portée de l'homme du métier.

Le terme « homogénéité du mélange » signifie que le mélange prend la forme d'un liquide parfaitement lisse, sans grumeau ni décantation de l'un ou l'autre des constituants de la formulation.

Le temps pour assurer l'homogénéité dans l'étape g. dépend du volume du réacteur, de la quantité de formulation introduite et des proportions relatives de chaque constituant dans la formulation.

A une échelle de laboratoire, sur une centaine de grammes, l'agitation du mélange est comprise entre 5 et 25 secondes, en particulier 20 secondes, à la portée de l'homme du métier.

Dans un mode de réalisation avantageux, la présente invention concerne un procédé de préparation d'une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique, et comprenant des produits de polycondensation du formaldéhyde avec ledit tanin de type procyanidine et/ou prodelphinidine, et dépourvue de produits de polycondensation du formaldéhyde avec ledit tanin de type prorobinetidine et/ou profisetinidine, telle que définie ci-dessus,
comprenant les étapes suivantes :
a. Introduction d'une fraction en poids de la quantité totale d'au moins un tanin de type procyanidine et/ou prodelphinidine, dépourvu de tanin de type prorobinetidine et/ou profisetinidine à mettre en oeuvre, en particulier 1/3, dans un mélange comprenant de l'alcool furfurylique, de l'éther diéthylique, du formaldéhyde et éventuellement des additifs.
b. Agitation du mélange de l'étape a.
c. Introduction d'une deuxième fraction en poids équivalente à celle de l'étape a. et agitation.
d. Introduction d'une troisième fraction en poids équivalente à celle de l'étape a. et agitation.
e. Agitation du mélange comprenant la quantité totale de tanin, de l'alcool furfurylique, de l'éther diéthylique, du formaldéhyde et éventuellement des additifs pendant un temps qui assure l'homogénéité du mélange.
f. Addition éventuelle d'autres additifs à ce mélange et agitation jusqu'à homogénéisation complète.
g. Addition au mélange comprenant la quantité totale de tanin d'un catalyseur, en particulier de l'acide paratoluènesulfonique.
h. Agitation du mélange comprenant la quantité totale de tanin, de l'alcool furfurylique, de l'éther diéthylique, du formaldéhyde, éventuellement des additifs et le catalyseur à une vitesse équivalente à celle de l'étape c. pendant un temps qui assure l'homogénéité du mélange.

Dans ce mode de réalisation, le procédé comprend du formaldéhyde et hormis l'eau présente dans les constituants de la formulation, il n'y a pas d'eau ajoutée dans celle-ci.

Les autres caractéristiques sont identiques à celles du procédé sans formaldéhyde ci-dessus.

Selon un autre aspect, l'invention concerne l'utilisation d'une mousse rigide comprenant au moins un tanin de type procyanidine et/ou prodelphinidine, polymérisé avec de l'alcool furfurylique et dépourvue de tanin de type prorobinetidine ou profisetinidine polymérisé avec de l'alcool furfurylique,
et comprenant des produits de polycondensation du formaldéhyde avec ledit tanin de type procyanidine et/ou prodelphinidine,
ou dépourvue de produits de polycondensation du formaldéhyde avec ledit tanin de type procyanidine et/ou prodelphinidine,
en tant que :
matériau d'isolation pour l'habitation, notamment l'isolation intérieure,
piégeur de métaux lourds en solution, en particulier du plomb,
absorbeur de choc, en particulier dans l'automobile, ou
mousse florale.

L'invention est illustrée par la figure 1 et les exemples 1 à 4.

### DESCRIPTION DES FIGURES

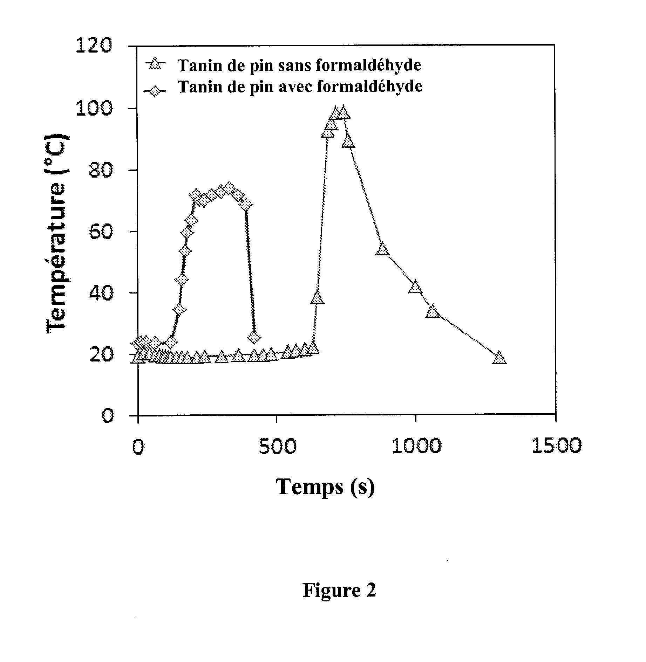

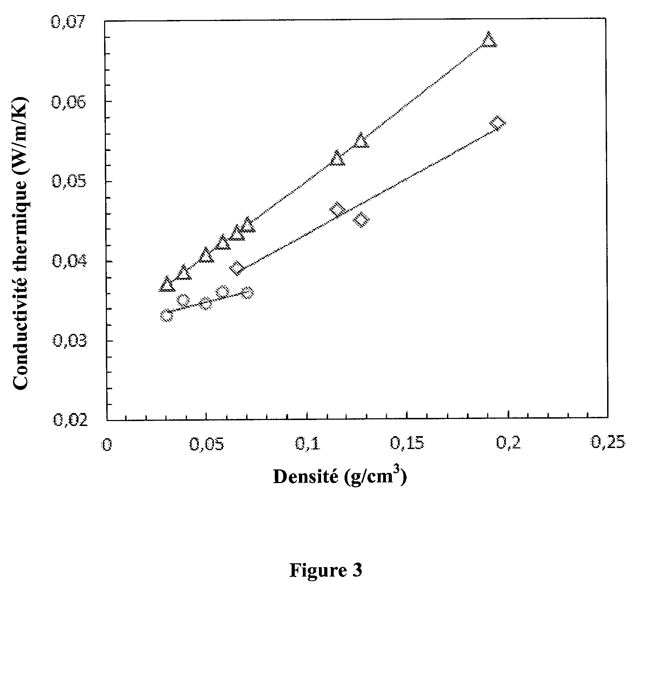

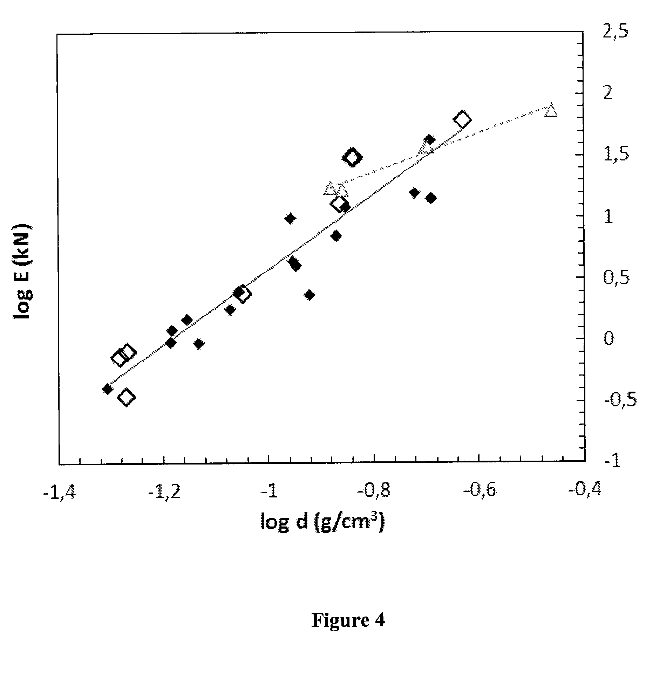

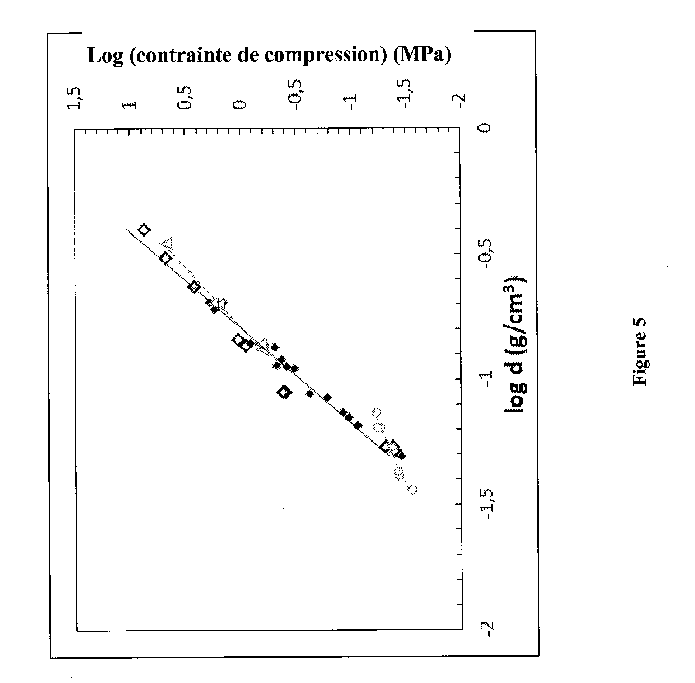

**Les** **figures 1A à 1B** présentent les quatre entités flavonoïdes présentes dans les tanins.
   Figure 1A: tanins de type prodelphinidine possédant un anneau A de type phloroglucinol et un anneau B de type pyrogallol (l'élément de base est la gallocatéchine)
   Figure 1B: tanins de type procyanidine possédant un anneau A de type phloroglucinol et un anneau B de type catéchol (l'élément de base est la catéchine).
   Figure 1C: les tanins de type prorobinetinidine possédant un anneau A de type résorcinol et un anneau B de type pyrogallol (l'élément de base est le robinetinidol).
   Figure 1D: les tanins de type profisetinidine possédant un anneau A de type résorcinol et un anneau B de type catéchol (l'élément de base est le fisetinidol).
**La** **figure 2** présente la température mesurée avec un thermocouple à l'intérieur du mélange durant la croissance de la mousse (exemple 5, éther diéthylique (DE) = 3g). La mousse formée avec le tanin de pin avec du formaldéhyde commence à croître à partir de 2 minutes et la température maximum atteint 73,9°C alors que la mousse à base de tanin de pin formée sans formaldéhyde croît à partir de 10 minutes et atteint un maximum à 98,4°C.
   L'axe des x représente le temps en seconde.
   L'axe des y représente la température en °C.
   La courbe de gauche (losanges) correspond au tanin de pin avec le formaldéhyde.
   La courbe de droite (triangles) représente le tanin de pin sans formaldéhyde.
**La** **figure 3** présente la conductivité thermique des mousses obtenues avec ou sans formaldéhyde avec du tanin de pin ou du tanin de mimosa en fonction de la densité de la mousse (exemple 5, DE = 3g).
   A une densité apparente de 0.031 g.cm⁻³, la conductivité thermique atteint 0,033 W/m/K pour le tanin de pin sans formaldéhyde (cercles) et 0,037 W/m/K pour le tanin de mimosa avec formaldéhyde (triangles)
   A une densité apparente de 0.065 g/cm³, la conductivité thermique est de 0,038 W/m/K pour le tanin de pin avec formaldéhyde (losanges).
   Les mousses à partir de tanins de pin possèdent donc une conductivité thermique plus faible que les mousses à partir de tanin de mimosa et sont donc des matériaux isolants supérieurs à ceux obtenus avec les tanins de mimosa.
   Axe des x : densité (g/cm³)
   Axe des y : conductivité thermique (W/m/K)
**La** **figure 4** présente le module de Young (module d'élasticité) en fonction de la densité apparente exprimée en échelle double logarithmique pour les mousses à base de tanin de pin ou de mimosa en utilisant l'éther diéthylique (DE) ou le pentane (P) (Exemple 5).
   Le même comportement est observé pour l'éther diéthylique (losanges blancs) ou le pentane (losanges noirs) avec le tanin de pin.
   Les triangles blancs représentent le résultat obtenu avec le tanin de mimosa et le pentane. La pente obtenue avec le tanin de pin (pentane ou éther diéthylique) est de 3,05, le double de celle obtenue avec le tanin de mimosa (1,56).
   Axe des x : log d(g/cm³)
   Axe des y : log E(kN)
**La** **figure 5** présente la contrainte de compression en fonction de la densité apparente exprimée en échelle double logarithmique pour les mousses à base de tanin de pin ou de mimosa avec ou sans formaldéhyde en présence d'éther diéthylique (DE) ou de pentane (P) (Exemple 5)
   Les losanges blancs représentent le tanin de pin avec pentane et formaldéhyde.
   Les losanges noirs représentent le tanin de pin avec éther diéthylique et formaldéhyde. Les triangles blancs représentent le tanin de mimosa avec pentane et formaldéhyde.
   Les cercles blancs représentent le tanin de pin avec éther diéthylique sans formaldéhyde. Les contraintes de compression obtenues avec les mousses à base de tanin de pin avec éther diéthylique ou pentane sont identiques.
   La ligne pleine correspond aux mousses à base de tanin de pin avec pentane ou éther diéthylique avec une pente de 2,63 au lieu de 2,10 pour les mousses à base de tanin de mimosa.
   Axe des x : log d(g/cm³)
   Axe des y : log (contrainte de compression)(MPa)

### EXEMPLES

### Exemple 1 : Procédure générale pour la préparation de mousses à base de tanins de type procyanidine et/ou prodelphinidine sans formaldéhyde.

La procédure présentée pour le tanin d'écorce de pin est représentative des autres tanins de type procyanidine et/ou prodelphinidine.

Les tanins se présentent sous la forme d'une poudre obtenue par atomisation (spray-drying) d'une solution mère, et qui doit être éventuellement affinée par broyage en mortier en cas d'agglomération des particules.

Cette étape ne modifie pas la taille des particules.

Les tanins (tanin d'écorce de pin, 9% d'humidité) sont ajoutés à la formulation comprenant de l'alcool furfurylique, de l'éther diéthylique, et éventuellement des additifs en 3 fois :
1/3 à une vitesse d'agitation de 800 tours/minute, 1/3 à une vitesse d'agitation de 1300 tours/minute et 1/3 à une vitesse d'agitation de 2000 tours/minute.

L'addition doit être effectuée rapidement.

Le milieu réactionnel est agité pendant 20 secondes à 2000 tours/minute, avant d'ajouter le catalyseur (APTS, 65% dans H₂O).

Le temps total écoulé avant l'introduction du catalyseur doit donc être très inférieur à 30 minutes dans cet exemple à l'échelle du laboratoire.

Le milieu réactionnel est ensuite agité pendant 20 secondes à une vitesse inférieure à 2000 tours/minute car il devient plus liquide.

Le milieu réactionnel est ensuite versé dans un moule recouvert d'un film de polyéthylène ou de papier siliconé, permettant de donner la forme désirée à la mousse.

Le gonflement commence après environ 1 à 3 minutes suivant l'introduction du catalyseur.

### Exemple 1.1 : Variation de la quantité de catalyseur

| *Formulation* | ***A*** | ***B*** | ***C*** | ***D*** | ***E*** |
|---|---|---|---|---|---|
| Tanins d'écorce de pin (g) | 30 | 30 | 30 | 30 | 30 |
| APT S (g) | 13 | 11 | 10 | 12 | 14 |
| Alcool furfurylique (g) | 38 | 38 | 38 | 38 | 38 |
| Ether diéthylique (g) | 3 | 3 | 3 | 3 | 3 |
| Densité apparente (g/cm³) | 0,029 | 0,030 | 0,043 | 0,037 | 0,038 |
| Conductivité thermique (W/mK) | 0,037 | - | - | - | - |

Les formulations A, B et D donnent les mousses les plus homogènes. Les processus d'exothermie et la relation cinétique de durcissement-cinétique de croissance sont bien contrôlés.

### Exemple 1.2 : Variation de la quantité d'alcool furfurylique et/ou de la quantité de catalyseur (APTS)

| *Formulation* | ***F*** | ***G*** | ***H*** | ***I*** | ***J*** |
|---|---|---|---|---|---|
| Tanins d'écorce de pin (g) | 30 | 30 | 30 | 30 | 30 |
| APTS (g) | 11 | 10 | 12 | 10 | 11 |
| Alcool furfurylique (g) | 33 | 33 | 35 | 35 | 35 |
| Ether diéthylique (g) | 3 | 3 | 3 | 3 | 3 |
| Densité apparente (g/cm³) | 0,042 | - | 0,032 | 0,029 | 0,029 |

Les meilleures mousses obtenues sont celles des formulations H-J.

### Exemple 1.3 : Introduction d'un additif dans la formulation : exemple du PEG 400

| *Formulation* | ***K*** | ***L*** | ***M*** | ***N*** |
|---|---|---|---|---|
| Tanins d'écorce de pin (g) | 30 | 30 | 30 | 30 |
| APTS (g) | 11 | 11 | 11 | 11 |
| Alcool furfurylique (g) | 35 | 35 | 35 | 35 |
| PEG400 (g) | 4 | 3 | 2 | 5 |
| Ether diéthylique (g) | 3 | 3 | 3 | 3 |
| Densité apparente (g/cm³) | 0,023 | 0,021 | 0,025 | 0,0285 |
| Conductivité thermique (W/mK) | - | 0,033 | - | - |

Le PEG 400 permet de dissiper une partie de la chaleur dégagée lors des réactions de polymérisation, et en conséquence il se passe d'avantage de temps avant que la mousse ne se mette à monter, et ce d'autant plus que la quantité de PEG ajoutée est grande.

L'exothermie diminue en fonction des doses croissantes de PEG400 introduites.

### Exemple 1.4 : Introduction d'acide borique et/ou d'acide phosphorique

Les formulations sont les mêmes que dans les exemples 1.1, 1.2 et 1.3 à la différence que quelques pourcents (de 1 à 5% en poids) d'acide borique et/ou d'acide phosphorique sont introduits. Le pourcentage des autres composés est donc très légèrement réduit (par exemple l'APTS) de manière à ce que le total fasse toujours 100%.

La présence d'acide borique et/ou phosphorique en tant qu'additifs dans la formulation (donc à des teneurs de quelques pourcents en masse) n'entraîne pas de modifications significatives des propriétés physiques, mais seulement un caractère retardant au feu qui s'en trouve encore amélioré par rapport aux mousses qui en sont dépourvues.

### Exemple 2: Préparation de mousses carbonées à partir de mousses sans formaldéhyde

Un échantillon de mousses de l'exemple 1 est introduit dans un tube en quartz placé dans un four tubulaire horizontal. La pyrolyse est effectuée par chauffage à 4°C/min sous azote jusqu'à une température finale de 900°C qui est maintenue pendant 2h.

Le chauffage est ensuite arrêté et l'échantillon est laissé refroidir à température ambiante sous azote.

Des mousses carbonées d'aspect vitreux, noires, cassantes et brillantes sont obtenues. Il n'y a pas, à densité apparente équivalente, de différence notable de propriétés comparées aux mousses carbonées dont le précurseur ne contenait pas de formaldéhyde.

### Exemple 3 : Procédure générale pour la préparation de mousses à base de tanins de type procyanidine et/ou prodelphinidine avec formaldéhyde.

La procédure présentée pour le tanin d'écorce de pin est représentative des autres tanins de type procyanidine et/ou prodelphinidine.

Les tanins se présentent sous la forme d'une poudre obtenue par atomisation (spray-drying) d'une solution mère, et qui doit être éventuellement affinée par broyage en mortier en cas d'agglomération des particules.

Cette étape ne modifie pas la taille des particules.

Les tanins (tanin d'écorce de pin, 9% d'humidité) sont ajoutés à la formulation comprenant de l'alcool furfurylique, de l'éther diéthylique, du formaldéhyde (37% dans H₂O) et éventuellement des additifs en 3 fois :
1/3 à une vitesse d'agitation de 800 tours/minute, 1/3 à une vitesse d'agitation de 1300 tours/minute et 1/3 à une vitesse d'agitation de 2000 tours/minute.

L'addition doit être effectuée rapidement.

Le milieu réactionnel est agité pendant 20 secondes à 2000 tours/minute, avant d'ajouter le catalyseur (APTS, 65% dans H₂O).

Le temps total écoulé avant l'introduction du catalyseur doit donc être très inférieur à 30 minutes dans cet exemple à l'échelle du laboratoire.

Le milieu réactionnel est ensuite agité pendant 20 secondes à une vitesse inférieure à 2000 tours/minute car il devient plus liquide.

Si le diamètre du bécher n'est pas trop large, il faut placer l'hélice de l'agitateur légèrement éloignée du centre, et afin d'optimiser l'agitation, il faut casser le vortex.

Le milieu réactionnel est ensuite versé dans un moule recouvert d'un film de polyéthylène ou de papier siliconé, permettant de donner la forme désirée à la mousse.

Le gonflement commence après environ 1 à 3 minutes suivant l'introduction du catalyseur.

| *Formulation* | *O* |
|---|---|
| Tanins d'écorce de pin (g) | 30 |
| APTS (g) | 11 |
| Formaldéhyde (g) | 7,5 |
| Alcool furfurylique (g) | 19 |
| PEG400 (g) | 4,5 |
| Ether diéthylique (g) | 3 |

### Pycnométrie de la formulation O:

Densité du squelette de la mousse: 1,41 g/cm³
Densité du squelette après broyage : 1,45 g/ cm³
Pourcentage de porosité ouverte : 97 %
Densité apparente : 0,103 g/ cm³

### Exemple 4 : Préparation de mousses carbonées à partir de mousses avec formaldéhyde

Le même protocole que dans l'exemple 2 est utilisé.

Il n'y a pas, à densité apparente équivalente, de différence notable de propriétés comparées aux mousses carbonées dont le précurseur contenait initialement du formaldéhyde.

### Exemple 5 : comparaison des mousses obtenues avec le tanin de mimosa ou le tanin de pin en présence ou non de formaldéhyde et d'agent moussant choisi parmi le pentane ou l'éther diéthylique et comparaison avec des mousses phénoliques.

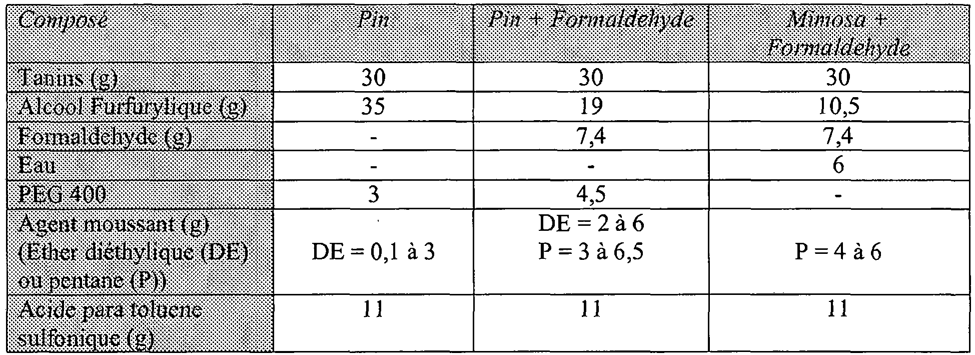

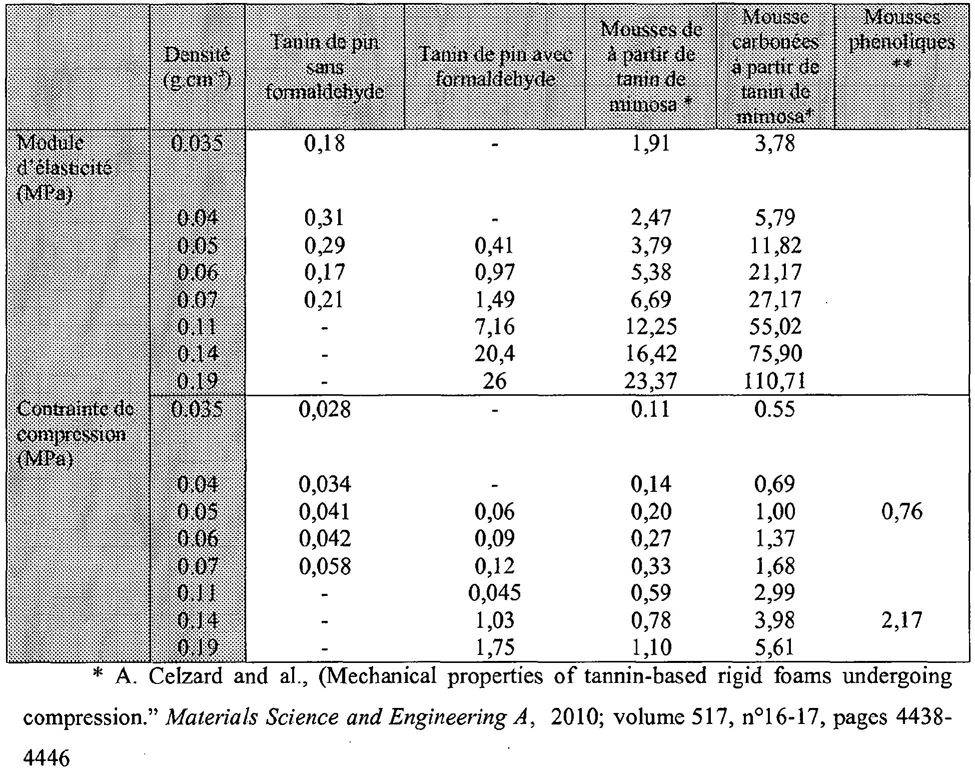

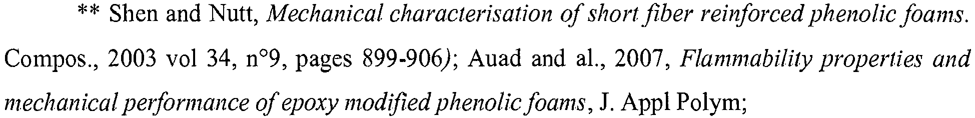

Les mousses à base de tanins de pin sans formaldéhyde ont un module d'élasticité de 0,023MPa en moyenne et aucune évolution n'est observée avec la densité apparente, ce qui peut être du à la fragilité du matériel qui est représentée par la contrainte de compression qui est faible à : 0,028MPa à 0,058 MPa pour des densités de 0,035 à 0,07 g/cm³ respectivement.

Quand le formaldéhyde est ajouté, les mousses à base de tanin de pin sont plus solides et à faible densité apparente, leurs propriétés mécaniques sont plus faibles que celles obtenues avec les mousses à base de tanin de mimosa. Mais à densité apparente plus élevée, les mousses à base de tanin de pin ont de meilleures propriétés mécaniques que les mousses à base de tanin de mimosa.

Il peut donc être conclu que les mousses à base de tanin de pin ont de meilleures propriétés pour des valeurs de densité apparente supérieures à 0,10 g/cm³ pour le module de Young et supérieures à 0,14 g/cm³ pour la contrainte de compression respectivement.

## Revendications

1. Utilisation d'au moins un tanin de type procyanidine et/ou prodelphinidine, dépourvu de tanin de type prorobinetidine et/ou profisetinidine, en mélange avec de l'alcool furfurylique pour la mise en oeuvre d'une réaction de polymérisation pour la préparation de mousses rigides, ledit tanin de type procyanidine et/ou prodelphinidine étant en particulier du tanin d'écorce de pin.

2. Utilisation selon la revendication 1, dans laquelle ledit mélange tanin-alcool furfurylique est dépourvu de formaldéhyde.

3. Utilisation selon la revendication 1, dans laquelle ledit mélange tanin-alcool furfurylique comprend du formaldéhyde.

4. Utilisation selon l'une des revendications 1 à 3, comprenant de plus un solvant volatil, en particulier de l'éther diéthylique, un catalyseur, en particulier de l'acide paratoluènesulphonique, et éventuellement un ou plusieurs additifs.

5. Mousse rigide comprenant au moins un tanin de type procyanidine et/ou prodelphinidine, polymérisé avec de l'alcool furfurylique et dépourvue de tanin de type prorobinetidine et/ou profisetinidine polymérisé avec de l'alcool furfurylique, ledit tanin étant en particulier du tanin d'écorce de pin.

6. Mousse rigide selon la revendication 5, dépourvue de produits de polycondensation du formaldéhyde avec ledit tanin de type procyanidine et/ou prodelphinidine.

7. Mousse rigide selon la revendication 6, ayant une densité apparente comprise de 0,01 g/cm³ à 0,16 g/cm³, en particulier 0,02 g/cm³ à 0,025 g/cm³ et/ou une conductivité thermique comprise de 0,03 W/m/K à 0,05 W/m/K, en particulier 0,030 W/m/K et/ou un module d'élasticité compris de 0,05 MPa à 14 MPa, en particulier de 0,1 MPa.

8. Mousse rigide selon la revendication 5, comprenant de plus des produits de polycondensation du formaldéhyde avec ledit tanin de type procyanidine et/ou prodelphinidine et dépourvue de produits de polycondensation du formaldéhyde avec ledit tanin de type prorobinetidine et/ou profisetinidine.

9. Mousse rigide selon la revendication 8, ayant une densité apparente comprise de 0,01 g/cm³ à 0,20 g/cm³, notamment de 0,01 g/cm³ à 0,16 g/cm³, en particulier 0,07 g/cm³ et/ou une conductivité thermique comprise de 0,03 W/m/K à 0,06 W/m/K, notamment de 0,03 W/m/K à 0,05 W/m/K, en particulier 0,039 W/m/K et/ou un module d'élasticité compris de 0,16 MPa à 30 MPa, notamment de 0.16 MPa à 16 MPa, avantageusement 2,5, en particulier de 1,49 MPa.

10. Mousse rigide selon l'une des revendications 5 à 9, comprenant de plus un ou plusieurs additifs, en particulier choisis dans le groupe comprenant un tensioactif, de l'acide borique, de l'acide phosphorique, du PEG et leurs mélanges.

11. Procédé de préparation d'une mousse rigide telle que définie dans la revendication 5, comprenant de deux à cinq étapes d'introduction d'au moins un tanin de type procyanidine et/ou prodelphinidine, dépourvu de tanin de type prorobinetidine et/ou profisetinidine, avec de l'alcool furfurylique.

12. Procédé de préparation d'une mousse rigide selon la revendication 11, dans lequel lesdites étapes de mise en contact d'au moins un tanin de type procyanidine et/ou prodelphinidine avec de l'alcool furfurylique sont effectuées en présence d'un solvant volatil, en particulier de l'éther diéthylique, et éventuellement d'additifs, dans un temps inférieur à 30 minutes, préférentiellement inférieur à 20 minutes et plus préférentiellement inférieur à 10 minutes.

13. Procédé de préparation d'une mousse rigide selon la revendication 11 ou 12, comprenant de plus une étape d'addition d'un catalyseur, en particulier de l'acide paratoluènesulfonique.

14. Procédé de préparation d'une mousse rigide selon l'une des revendications 11 à 13, comprenant les étapes suivantes :
a. Mise en contact d'une fraction en poids de la quantité totale d'au moins un tanin de type procyanidine et/ou prodelphinidine, dépourvu de tanin de type prorobinetidine et/ou profisetinidine à mettre en oeuvre, en particulier 1/3, avec un mélange comprenant de l'alcool furfurylique, de l'éther diéthylique et éventuellement des additifs,
b. Agitation du mélange de l'étape a.
c. Introduction d'une deuxième fraction en poids équivalente à celle de l'étape a. et agitation.
d. Introduction d'une troisième fraction en poids équivalente à celle de l'étape a. et agitation.
e. Agitation du mélange comprenant la quantité totale de tanin, de l'alcool furfurylique, de l'éther diéthylique et éventuellement des additifs pendant un temps qui assure l'homogénéité du mélange.
f. Addition éventuelle d'autres additifs à ce mélange et agitation jusqu'à homogénéisation complète.
g. Addition au mélange comprenant la quantité totale de tanin, d'un catalyseur, en particulier de l'acide paratoluènesulfonique.
h. Agitation du mélange comprenant la quantité totale de tanin, de l'alcool furfurylique, de l'éther diéthylique, éventuellement des additifs et le catalyseur à une vitesse équivalente à celle de l'étape c pendant un temps qui assure l'homogénéité du mélange.

15. Procédé selon l'une des revendications 11 à 13, comprenant les étapes suivantes :
a. Introduction d'une fraction en poids de la quantité totale d'au moins un tanin de type procyanidine et/ou prodelphinidine, dépourvu de tanin de type prorobinetidine et/ou profisetinidine à mettre en oeuvre, en particulier 1/3, dans un mélange comprenant de l'alcool furfurylique, de l'éther diéthylique, du formaldéhyde et éventuellement des additifs,
b. Agitation du mélange de l'étape a.
c. Introduction d'une deuxième fraction en poids équivalente à celle de l'étape a. et agitation.
d. Introduction d'une troisième fraction en poids équivalente à celle de l'étape a. et agitation.
e. Agitation du mélange comprenant la quantité totale de tanin, de l'alcool furfurylique, de l'éther diéthylique, du formaldéhyde et éventuellement des additifs pendant un temps qui assure l'homogénéité du mélange.
f. Addition éventuelle d'autres additifs à ce mélange et agitation jusqu'à homogénéisation complète.
g. Addition au mélange comprenant la quantité totale de tanin d'un catalyseur, en particulier de l'acide paratoluènesulfonique.
h. Agitation du mélange comprenant la quantité totale de tanin, de l'alcool furfurylique, de l'éther diéthylique, du formaldéhyde, éventuellement des additifs et le catalyseur à une vitesse équivalente à celle de l'étape c pendant un temps qui assure l'homogénéité du mélange.

16. Mousse carbonée susceptible d'être obtenue par pyrolyse d'une mousse rigide selon l'une quelconque des revendications 5 à 10.

## Patentansprüche

1. Verwendung zumindest eines Tannins vom Typ Procyanidin und/oder Prodelphinidin, das frei von Tannin vom Typ Prorobinetidin und/oder Profisetinidin ist, als Gemisch mit Furfurylalkohol zum Durchführen einer Polymerisationsreaktion für die Herstellung von Hartschaumstoffen, wobei das Tannin vom Typ Procyanidin und/oder Prodelphinidin insbesondere Tannin von Kiefernrinde ist.

2. Verwendung nach Anspruch 1, wobei das Tannin-Furfurylalkohol-Gemisch frei von Formaldehyd ist.

3. Verwendung nach Anspruch 1, wobei das Tannin-Furfurylalkohol-Gemisch Formaldehyd enthält.

4. Verwendung nach einem der Ansprüche 1 bis 3, ferner umfassend ein flüchtiges Lösungsmittel, insbesondere Diethylether, einen Katalysator, insbesondere p-Toluolsulfonsäure, und gegebenenfalls einen oder mehrere Zusätze.

5. Hartschaumstoff, enthaltend zumindest ein Tannin vom Typ Procyanidin und/oder Prodelphinidin, das mit Furfurylalkohol polymerisiert und frei von mit Furfurylalkohol polymerisiertem Tannin vom Typ Prorobinetidin und/oder Profisetinidin ist, wobei das Tannin insbesondere Tannin der Kiefernrinde ist.

6. Hartschaumstoff nach Anspruch 5, der frei ist von Polykondensationsprodukten von Formaldehyd mit dem Tannin vom Typ Procyanidin und/oder Prodelphinidin.

7. Hartschaumstoff nach Anspruch 6, mit einer scheinbaren Dichte von 0,01 g/cm³ bis 0,16 g/cm³, insbesondere 0,02 g/cm³ bis 0,025 g/cm³, und/oder einer thermischen Leitfähigkeit von 0,03 W/m/K bis 0,05 W/m/K, insbesondere 0,030 W/m/K, und/oder einem Elastizitätsmodul von 0,05 MPa bis 14 MPa, insbesondere 0,1 MPa.

8. Hartschaumstoff nach Anspruch 5, das ferner Polykondensationsprodukte von Formaldehyd mit dem Tannin vom Typ Procyanidin und/oder Prodelphinidin enthält und frei ist von Polykondensationsprodukten von Formaldehyd mit Tannin vom Typ Prorobinetidin und/oder Profisetinidin.

9. Hartschaumstoff nach Anspruch 8, mit einer scheinbaren Dichte von 0,01 g/cm³ bis 0,20 g/cm³, insbesondere 0,01 g/cm³ bis 0,16 g/cm³, insbesondere 0,07 g/cm³, und/oder einer thermischen Leitfähigkeit von 0,03 W/m/K bis 0,06 W/m/K, insbesondere 0,03 W/m/K bis 0,05 W/m/K, insbesondere 0,039 W/m/K, und/oder einem Elastizitätsmodul von 0,16 MPa bis 30 MPa, insbesondere von 0,16 MPa bis 16 MPa, vorzugsweise 2,5, insbesondere 1,49 MPa.

10. Hartschaumstoff nach einem der Ansprüche 5 bis 9, enthaltend ferner einen oder mehrere Zusätze, insbesondere ausgewählt aus der Gruppe enthaltend ein Tensid, Borsäure, Phosphorsäure, PEG und deren Gemische.

11. Verfahren zum Herstellen eines Hartschaumstoffs, wie er in Anspruch 5 definiert ist, umfassend zwei bis fünf Schritte des Einführens zumindest eines Tannins vom Typ Procyanidin und/oder Prodelphinidin, das frei ist von Tannin vom Typ Prorobinetidin und/oder Profisetinidin, mit Furfurylalkohol.

12. Verfahren zum Herstellen eines Hartschaumstoffs nach Anspruch 11, wobei die Schritte des Inkontaktbringens von zumindest einem Tannin vom Typ Procyanidin und/oder Prodelphinidin mit Furfurylalkohol unter Vorhandensein von einem flüchtigen Lösungsmittel, insbesondere Diethylether, und gegebenenfalls von Zusätzen für eine Zeitdauer von unter 30 Minuten, vorzugsweise unter 20 Minuten und besonders bevorzugt unter 10 Minuten erfolgen.

13. Verfahren zum Herstellen eines Hartschaumstoffs nach Anspruch 11 oder 12, ferner umfassend einen Schritt des Hinzufügens von einem Katalysator, insbesondere p-Toluolsulfonsäure.

14. Verfahren zum Herstellen eines Hartschaumstoffs nach einem der Ansprüche 11 bis 13, umfassend die nachfolgenden Schritte:
a. Inkontaktbringen eines Gewichtsanteils, insbesondere 1/3, der Gesamtmenge zumindest eines Tannins vom Typ Procyanidin und/oder Prodelphinidin, das frei ist von einzusetzendem Tannin vom Typ Prorobinetidin und/oder Profisetinidin, mit einem Gemisch aus Furfurylalkohol, Diethylether und gegebenenfalls Zusätzen,
b. Rühren des Gemischs aus Schritt a.
c. Einführen eines zweiten Gewichtsanteils, der äquivalent ist zu dem in Schritt a., und Rühren,
d. Einführen eines dritten Gewichtsanteils, der äquivalent ist zu dem in Schritt a., und Rühren,
e. Rühren des Gemischs, das die Gesamtmenge an Tannin, Furfurylalkohol, Diethylether und gegebenenfalls Zusätze enthält, für eine Zeitdauer, welche die Homogenität des Gemischs gewährleistet,
f. gegebenenfalls Zufügen von weiteren Zusätzen zu diesem Gemisch und Rühren bis zur vollständigen Homogenisierung,
g. Hinzufügen eines Katalysators, insbesondere p-Toluolsulfonsäure, zum Gemisch mit der Gesamtmenge an Tannin,
h. Rühren des Gemischs, das die Gesamtmenge an Tannin, Furfurylalkohol, Diethylether und gegebenenfalls Zusätze und den Katalysator enthält, mit einer Geschwindigkeit, die äquivalent ist zu der bei Schritt c, für eine Zeitdauer, welche die Homogenität des Gemischs gewährleistet.

15. Verfahren nach einem der Ansprüche 11 bis 13, umfassend die nachfolgenden Schritte:
a. Einführen eines Gewichtsanteils, insbesondere 1/3, der Gesamtmenge zumindest eines Tannins vom Typ Procyanidin und/oder Prodelphinidin, das frei ist von einzusetzendem Tannin vom Typ Prorobinetidin und/oder Profisetinidin, in ein Gemisch aus Furfurylalkohol, Diethylether, Formaldehyd und gegebenenfalls Zusätzen,
b. Rühren des Gemischs von Schritt a.
c. Einführen eines zweiten Gewichtsanteils, der äquivalent ist zu dem in Schritt a., und Rühren,
d. Einführen eines dritten Gewichtsanteils, der äquivalent ist zu dem in Schritt a., und Rühren,
e. Rühren des Gemischs, das die Gesamtmenge an Tannin, Furfurylalkohol, Diethylether, Formaldehyd und gegebenenfalls Zusätze enthält, für eine Zeitdauer, welche die Homogenität des Gemischs gewährleistet,
f. gegebenenfalls Zufügen von weiteren Zusätzen zu diesem Gemisch und Rühren bis zur vollständigen Homogenisierung,
g. Hinzufügen eines Katalysators, insbesondere p-Toluolsulfonsäure, zum Gemisch mit der Gesamtmenge an Tannin,
h. Rühren des Gemischs, das die Gesamtmenge an Tannin, Furfurylalkohol, Diethylether, Formaldehyd und gegebenenfalls Zusätze und den Katalysator enthält, mit einer Geschwindigkeit, die äquivalent ist zu der von Schritt c, für eine Zeitdauer, welche die Homogenität des Gemischs gewährleistet.

16. Kohlenstoffschaum, der durch Pyrolyse eines Hartschaumstoffs nach einem der Ansprüche 5 bis 10 erhalten werden kann.

## Claims

1. Use of at least one procyanidin- and/or prodelphinidin-type tannin, devoid of prorobinetidin- and/or profisetinidin-type tannin, in a mixture with furfuryl alcohol for the implementation of a polymerization reaction for the preparation of rigid foams, said procyanidin- and/or prodelphinidin-type tannin being in particular pine bark tannin.

2. Use according to claim 1, in which said tannin-furfuryl alcohol mixture is devoid of formaldehyde.

3. Use according to claim 1, in which said tannin-furfuryl alcohol mixture comprises formaldehyde.

4. Use according to one of claims 1 to 3, comprising moreover a volatile solvent, in particular diethyl ether, a catalyst, in particular paratoluenesulphonic acid, and optionally one or more additives.

5. Rigid foam comprising at least one procyanidin- and/or prodelphinidin-type tannin, polymerized with furfuryl alcohol and devoid of prorobinetidin- and/or profisetinidin-type tannin polymerized with furfuryl alcohol, said tannin being in particular pine bark tannin.

6. Rigid foam according to claim 5, devoid of the polycondensation products of formaldehyde with said procyanidin- and/or prodelphinidin-type tannin.

7. Rigid foam according to claim 6, having an apparent density comprised from 0.01 g/cm³ to 0.16 g/cm³, in particular 0.02 g/cm³ to 0.025 g/cm³ and/or a thermal conductivity comprised from 0.03 W/m/K to 0.05 W/m/K, in particular 0.030 W/m/K and/or a modulus of elasticity comprised from 0.05 MPa to 14 MPa, in particular 0.1 MPa.

8. Rigid foam according to claim 5, comprising moreover the polycondensation products of formaldehyde with said procyanidin- and/or prodelphinidin-type tannin and devoid of the polycondensation products of formaldehyde with said prorobinetidin- and/or profisetinidin-type tannin.

9. Rigid foam according to claim 8, having an apparent density comprised from 0.01 g/cm³ to 0.20 g/cm³, particularly from 0.01 g/cm³ to 0.16 g/cm³, in particular 0.07 g/cm³ and/or a thermal conductivity comprised from 0.03 W/m/K to 0.06 W/m/K, particularly from 0.03 W/m/K to 0.05 W/m/K, in particular 0.039 W/m/K and/or a modulus of elasticity comprised from 0.16 MPa to 30 MPa, particularly from 0.16 MPa to 16 MPa, advantageously 2.5, in particular 1.49 MPa.

10. Rigid foam according to one of claims 5 to 9, comprising moreover one or more additives, in particular chosen from the group comprising a surfactant, boric acid, phosphoric acid, PEG and mixtures thereof.

11. Process for the preparation of a rigid foam as defined in claim 5, comprising from two to five steps of introduction of at least one procyanidin- and/or prodelphinidin-type tannin, devoid of prorobinetidin- and/or profisetinidin-type tannin, with furfuryl alcohol.

12. Process for the preparation of a rigid foam according to claim 11, in which said steps of bringing at least one procyanidin- and/or prodelphinidin-type tannin into contact with furfuryl alcohol are carried out in the presence of a volatile solvent, in particular diethyl ether, and optionally of additives, in a time of less than 30 minutes, preferentially less than 20 minutes and more preferentially less than 10 minutes.

13. Process for the preparation of a rigid foam according to claim 11 or 12, comprising moreover a step of the addition of a catalyst, in particular of paratoluenesulphonic acid.

14. Process for the preparation of a rigid foam according to one of claims 11 to 13, comprising the following steps:
a. Contacting a fraction by weight of the total quantity of at least one procyanidin- and/or prodelphinidin-type tannin, devoid of prorobinetidin- and/or profisetinidin-type tannin to be implemented, in particular 1/3, in a mixture comprising furfuryl alcohol, diethyl ether and optionally additives,
b. Stirring the mixture of step a.
c. Introduction of a second fraction by weight equivalent to that of step a. and stirring.
d. Introduction of a third fraction by weight equivalent to that of step a. and stirring.
e. Stirring the mixture comprising the total quantity of tannin, furfuryl alcohol, diethyl ether and optionally additives for a time that ensures the homogeneity of the mixture.
f. The optional addition of other additives to this mixture and stirring until homogenization is complete.
g. Addition to the mixture comprising the total quantity of tannin, of a catalyst, in particular paratoluenesulphonic acid.
h. Stirring the mixture comprising the total quantity of tannin, furfuryl alcohol, diethyl ether, optionally additives and the catalyst at a speed equivalent to that of step c for a time that ensures the homogeneity of the mixture.

15. Process according to one of claims 11 to 13, comprising the following steps:
a. Introduction of a fraction by weight of the total quantity of at least one procyanidin- and/or prodelphinidin-type tannin, devoid of prorobinetidin- and/or profisetinidin-type tannin to be implemented, in particular 1/3, in a mixture comprising furfuryl alcohol, diethyl ether, formaldehyde and optionally additives,
b. Stirring the mixture of step a.
c. Introduction of a second fraction by weight equivalent to that of step a. and stirring.
d. Introduction of a third fraction by weight equivalent to that of step a. and stirring.
e. Stirring the mixture comprising the total quantity of tannin, furfuryl alcohol, diethyl ether, formaldehyde and optionally additives for a time that ensures the homogeneity of the mixture.
f. Optional addition of other additives to this mixture and stirring until homogenization is complete.
g. Addition of a catalyst, in particular paratoluenesulphonic acid, to the mixture comprising the total quantity of tannin.
h. Stirring the mixture comprising the total quantity of tannin, furfuryl alcohol, diethyl ether, formaldehyde, optionally additives and the catalyst at a speed equivalent to that of step c for a time that ensures the homogeneity of the mixture.

16. Carbonaceous foam capable of being obtained by pyrolysis of a rigid foam according to any one of claims 5 to 10.
